# EUROPEAN PATENT APPLICATION

(11) **EP 4 723 795 A1**
(43) Date of publication of application: **08.04.2026**
(21) Application number: 23939703.7
(22) Date of filing: 01.06.2023
(51) Int. Cl.: H04W 76/15, H04W 84/12, H04W 88/08, H04W 72/0446

(54) **SHARING ACCESS POINT, SHARED ACCESS POINT, AND TERMINAL DEVICE**

(71) Applicant: NTT, Inc., Tokyo 100-8116 (JP)
(72) Inventor: KISHIDA, Akira, Musashino-shi, Tokyo 180-8585 (JP); NAGATSU, Ryo, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/020522
(87) International publication number: WO 2024/247229

(57) **Abstract**

A sharing access point of the embodiment includes a first management unit. The sharing access point is included in a communication system including a shared access point including a second management unit and a first wireless signal processing unit, another shared access point including a third management unit and a second wireless signal processing unit, and a terminal apparatus including a fourth management unit and third and fourth wireless signal processing units. The first management unit establishes a first wireless link between the first and third wireless signal processing units and a second wireless link between the second and fourth wireless signal processing units, collectively establishes setting of a service period in which frame exchange of traffic can be preferentially performed for the first wireless link and the second wireless link by transmitting and receiving a frame to and from the third management unit via the first wireless link, and notifies each of the second management unit and the third management unit of a start time of the service period.

## Description

### Technical Field

An embodiment relates generally to a sharing access point, a shared access point and a terminal apparatus.

### Background Art

A wireless local area network (LAN) is known as a communication system that wirelessly connects an access point (AP) and a terminal apparatus. The terminal apparatus can access a network through an access point in a communicable area by the wireless LAN. In IEEE802.11be, multi-link transmission is mentioned in which a plurality of links (transmission paths) is established between a terminal apparatus and an access point. In multi-link transmission, a plurality of links can operate independently. In the next generation of standards, multi-AP communication, which is communication in which a plurality of links is established between a terminal apparatus and a plurality of access points, has been studied.

Furthermore, a restricted target wake time (R-TWT) function is known as a method of transmitting and receiving low-latency traffic between an access point and a terminal apparatus. An access point using the R-TWT function sets a service period in a period according to request latency of the low-latency traffic, and notifies the terminal apparatus of the set service period using a management frame or an action frame such as a beacon. Then, the access point gives priority to transmission and reception of low-latency traffic in the periodically set service period. As a result, latency and jitter of the low-latency traffic can be reduced. In a case where the R-TWT function is used in multi-link communication, content set up between the access point and the terminal apparatus using one link can be reflected in other links included in the multi-link.

### Citation List

### Non Patent Literature

Non Patent Literature 1: IEEE802.11be D3.0, "35.3.24 TWT operation", p585-p586, January 2023

### Summary of Invention

### Technical Problem

However, in multi-AP communication, the R-TWT function needs to be individually set for a plurality of access points connected to a terminal apparatus. Furthermore, in the multi-AP communication, in a case where cooperative communication cannot be performed between a plurality of access points, efficient transmission of low-latency traffic may be hindered.

The present invention has been made in view of the above circumstances, and an object thereof is to provide a wireless communication environment in which low-latency traffic can be efficiently transmitted in multi-AP communication.

### Solution to Problem

A sharing access point of the embodiment includes a first management unit. The sharing access point is included in a communication system including a shared access point including a second management unit and a first wireless signal processing unit, another shared access point including a third management unit and a second wireless signal processing unit, and a terminal apparatus including a fourth management unit and third and fourth wireless signal processing units. The first management unit establishes a first wireless link between the first and third wireless signal processing units and a second wireless link between the second and fourth wireless signal processing units, collectively establishes setting of a service period in which frame exchange of traffic can be preferentially performed for the first wireless link and the second wireless link by transmitting and receiving a frame to and from the third management unit via the first wireless link, and notifies each of the second management unit and the third management unit of a start time of the service period.

### Advantageous Effects of Invention

According to an embodiment, a wireless communication environment in which low-latency traffic can be efficiently transmitted can be provided.

### Brief Description of Drawings

Fig. 1 is a block diagram illustrating an example of a configuration of a communication system according to an embodiment.
Fig. 2 is a block diagram illustrating an example of a hardware configuration of a sharing access point included in the communication system according to the embodiment.
Fig. 3 is a block diagram illustrating an example of a hardware configuration of a shared access point included in the communication system according to the embodiment.
Fig. 4 is a block diagram illustrating an example of a hardware configuration of a terminal apparatus included in the communication system according to the embodiment.
Fig. 5 is a block diagram illustrating an example of a functional configuration of the sharing access point included in the communication system according to the embodiment.
Fig. 6 is a table illustrating an example of multi-AP management information included in a management unit of the sharing access point included in the communication system according to the embodiment.
Fig. 7 is a table illustrating an example of information associated with one affiliated STA in link management information included in the management unit of the sharing access point included in the communication system according to the embodiment.
Fig. 8 is a block diagram illustrating an example of a functional configuration of the shared access point included in the communication system according to the embodiment.
Fig. 9 is a block diagram illustrating an example of a functional configuration of the terminal apparatus included in the communication system according to the embodiment.
Fig. 10 is a flowchart illustrating an example of operation of the sharing access point included in the communication system according to the embodiment.
Fig. 11 is a sequence diagram illustrating an example of processing from multi-link setup to start of R-TWT communication in the communication system according to the embodiment.
Fig. 12 is a time chart illustrating an example of the R-TWT communication in the communication system according to the embodiment.

### Description of Embodiments

Hereinafter, embodiments will be described with reference to the drawings. The embodiments illustrate a device and a method for embodying the technical idea of the invention. The drawings are schematic or conceptual. In the following description, components having the same function and configuration are denoted by common reference signs. In a case where a plurality of components including the same function and configuration is distinguished, "hyphen + number" is added to the end of the reference sign.

### <1> Configuration

First, a configuration of a communication system 1 according to an embodiment will be described.

### <1-1> Configuration of Communication System 1

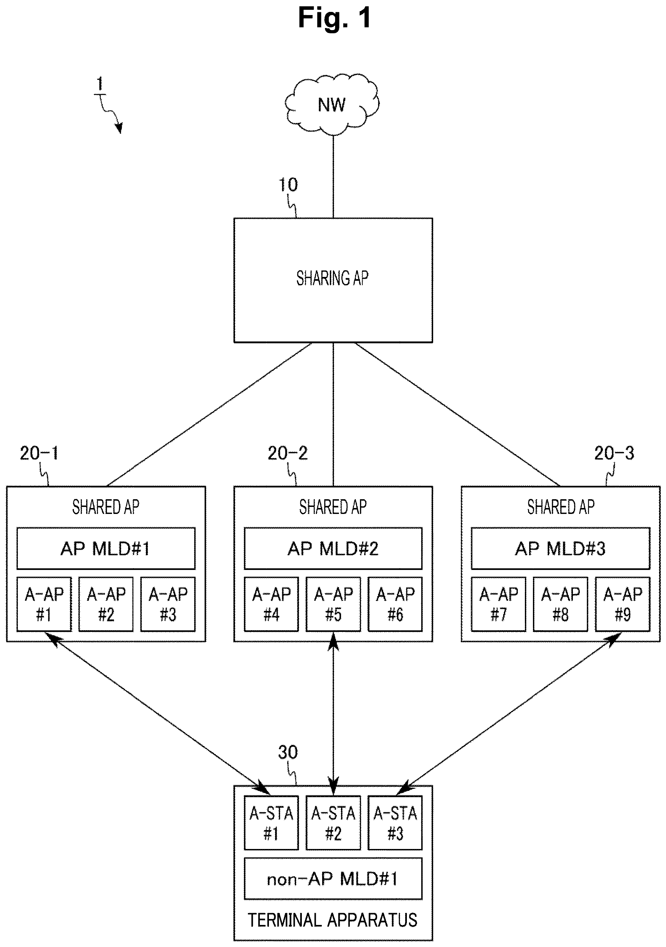

Fig. 1 is a block diagram illustrating an example of a configuration of the communication system 1 according to the embodiment. As illustrated in Fig. 1, the communication system 1 includes a sharing access point (sharing AP) 10, a plurality of shared access points (shared APs) 20, and a terminal apparatus 30.

The sharing AP 10 is a type of access point (AP) of a wireless LAN. The sharing AP is connected to a network NW in a wired or wireless manner. The sharing AP 10 performs wired communication or wireless communication with a server (not illustrated) on the network NW. Furthermore, the sharing AP is connected to each of the plurality of shared APs 20 in a wired or wireless manner. The sharing AP 10 performs wireless communication or wired communication with each of the plurality of shared APs 20.

Each of the shared APs 20 is a type of access point (AP) of a wireless LAN. The plurality of shared APs 20 includes configurations equivalent to each other. Each of the shared APs 20 performs wireless communication or wired communication with the sharing AP 10 and performs wireless communication with the terminal apparatus 30. The plurality of shared APs 20 is installed at positions separated from each other and includes different communicable areas. Note that the communicable area of each of the shared APs 20 may include a portion overlapping with the communicable area of another shared AP 20.

The terminal apparatus 30 is a wireless terminal such as a smartphone or a personal computer (PC). The terminal apparatus 30 is wirelessly connected to each of the shared APs 20. The terminal apparatus 30 wirelessly communicates with each of the shared APs 20. The terminal apparatus 30 supports multi-link communication using a plurality of channels (links). Note that the terminal apparatus 30 may be disposed so as to be included in a communicable area of at least one of the shared APs 20.

The wireless communication used in the communication system 1 conforms to, for example, the IEEE802.11 standard. The IEEE 802.11 standard includes, for example, a wireless communication function based on an open systems interconnection (OSI) reference model. In the OSI reference model, the wireless communication function is divided into seven layers (first layer: physical layer, second layer: data link layer, third layer: network layer, fourth layer: transport layer, fifth layer: session layer, sixth layer: presentation layer, seventh layer: application layer). The data link layer includes a logical link control (LLC) sublayer and a media access control (MAC) sublayer. As a frequency band used in the wireless communication of the communication system 1, for example, a 2.4 GHz band, a 5 GHz band, a 6 GHz band, a 45 GHz band, and a 60 GHz band can be used. A plurality of channels may be allocated to each frequency band.

### (Communication Method of Communication System 1)

In the communication system 1, each of the sharing AP 10, the shared APs 20, and the terminal apparatus 30 supports multi-link transmission as a communication method. Furthermore, the sharing AP 10 can establish multi-link with the terminal apparatus 30 using a plurality of shared APs 20 and indirectly communicate with the terminal apparatus 30 that has established the multi-link. In the present specification, a wireless connection method in which the terminal apparatus 30 communicates with the sharing AP 10 via a plurality of shared APs 20 is referred to as a "multi-AP connection method".

In the multi-AP connection method, a plurality of shared APs 20 belongs to the sharing AP 10. Fig. 1 illustrates a case where three shared APs 20-1, 20-2, and 20-3 belong to the sharing AP 10. Hereinafter, the configuration and operation of the communication system 1 will be described using a case where the three shared APs 20-1, 20-2, and 20-3 belong to the sharing AP 10 as an example.

In the present example, a link (transmission path) via the shared AP 20-1, a link (transmission path) via the shared AP 20-2, and a link (transmission path) via the shared AP 20-3 are established between the sharing AP 10 and the terminal apparatus 30. In this case, each of the shared APs 20-1, 20-2, and 20-3 is a candidate for a via-destination in data exchange between the sharing AP 10 and the terminal apparatus 30. Then, the terminal apparatus 30 executes data exchange with the sharing AP 10 via one of the shared APs 20-1, 20-2, and 20-3 that are candidates for a via-destination.

The terminal apparatus 30 includes a non-AP MLD and a plurality of affiliated STAs (A-STAs). The non-AP MLD is a multi-link device (MLD) that manages a link state and wireless communication of each of the plurality of A-STAs. The non-AP MLD can also perform processing for establishing a multi-link between the sharing AP 10 and the terminal apparatus 30 in the multi-AP connection method. Each of the A-STAs corresponds to a functional block of a wireless link established with the shared AP 20. In the present example, the terminal apparatus 30 includes a non-AP MLD#1 as the non-AP MLD, and includes an A-STA#1, an A-STA#2, and an A-STA#3 as the plurality of A-STAs. Different channels or the same channels are allocated to the A-STA#1 to A-STA#3. The same frequency band may be used or different frequency bands may be used for the A-STA#1 to A-STA#3.

Each of the shared APs 20 includes an AP MLD and a plurality of affiliated APs (A-APs). The AP MLD is an MLD that manages a link state and wireless communication of each of the plurality of A-APs. The AP MLD can also perform processing for establishing a multi-link between the sharing AP 10 and the terminal apparatus 30 in the multi-AP connection method. Each of the A-APs corresponds to a functional block of a wireless link established with the terminal apparatus 30. In the present example, the shared AP 20-1 includes an AP MLD#1 as the AP MLD, and includes an A-AP#1, an A-AP#2, and an A-AP#3 as the plurality of A-APs. In the present example, the shared AP 20-2 includes an AP MLD#2 as the AP MLD, and includes an A-AP#4, an A-AP#5, and an A-AP#6 as the plurality of A-APs. In the present example, the shared AP 20-3 includes an AP MLD#3 as the AP MLD, and includes an A-AP#7, an A-AP#8, and an A-AP#9 as the plurality of A-APs.

The A-STAs can each establish a link with one or more A-APs for each of the shared APs 20 that belongs to the sharing AP 10, for example. Then, each of the A-STAs is set to a state (that is, an enabled link) in which the A-STA can communicate with one A-AP among a plurality of A-APs for which the link is established. In the present example, each of the A-STA#1 to A-STA#3 has established links with the A-AP#1 to A-AP#9. Then, in the A-STA#1, a link with the A-AP#1 is set to be enabled, and links with other A-APs are set to be disabled. In the A-STA#2, a link with the A-AP#5 is set to be enabled, and links with other A-APs are set to be disabled. In the A-STA#3, a link with the A-AP#9 is set to be enabled, and links with other A-APs are set to be disabled.

Note that a plurality of links may be set enabled for one shared AP 20. In each of the shared APs 20, all links may be set to be disabled depending on the position of the terminal apparatus 30. Further, different identifiers are allocated to the non-AP MLD#1, the A-STA#1 to A-STA#3, the AP MLD#1 to AP MLD#3, and the A-AP#1 to A-AP#9. As such an identifier, a Link ID or a MAC address may be used. In the following description, the non-AP MLD#1, the A-STA#1 to A-STA#3, the AP MLD#1 to AP MLD#3, and the A-AP#1 to A-AP#9 are treated as identifiers.

### (R-TWT Function)

In the communication system 1, each of the sharing AP 10, the shared APs 20, and the terminal apparatus 30 supports a restricted target wake time (R-TWT) function. The R-TWT function is a function of allocating a service period in which traffic for which low latency is requested can be preferentially exchanged to the terminal apparatus 30. Hereinafter, the service period set by the R-TWT function is referred to as "R-TWT service period (R-TWT SP)", and the traffic for which low latency is requested is referred to as "low latency traffic".

The sharing AP 10 sets a certain period (TWT period) at the time of setting up the R-TWT function. The TWT period is preferably set in accordance with the transmission period of the low latency traffic. One period (TWT interval) of the TWT period includes the R-TWT SP. The R-TWT SP is determined by, for example, a TWT start time and a TWT duration. The TWT duration indicates the length of the R-TWT SP starting from the TWT start time. The terminal apparatus 30 can recognize a time based on the TWT start time and the TWT period as an rTWT start time of the next R-TWT service period SP. The TWT interval also corresponds to the interval of TWT start times of adjacent R-TWT service periods SP.

In the R-TWT SP, the sharing AP 10 gives a frame exchange opportunity to the terminal apparatus 30 preferentially using the shared AP 20 including an enabled link. The frame exchange opportunity corresponds to an opportunity in which the traffic (data) is transmitted by frame exchange. The terminal apparatus 30 transmits low latency traffic on the basis of, for example, reception of a trigger frame in the R-TWT SP. As described above, the R-TWT function can improve the latency of low latency traffic by preferentially transmitting the low latency traffic of the terminal apparatus 30 in the R-TWT SP.

In the setup of the R-TWT function, a transmission suppression period may be set so as to overlap with the R-TWT SP. The transmission suppression period corresponds to a period in which transmission of traffic by another terminal apparatus to which a frame exchange opportunity is not preferentially given is suppressed. Furthermore, the initial setting of the R-TWT function can be determined in various manners. For example, for the initial setting of the R-TWT function, an attribute of traffic such as an occurrence interval and a data amount of traffic in a notification from an application that generates low latency traffic may be used. In this case, the sharing AP 10 notifies a server on the network NW of a type of the traffic so as to acquire an attribute of the corresponding traffic. Then, the sharing AP 10 determines the initial setting of the R-TWT function on the basis of the acquired attribute of the traffic.

### <1-2> Hardware Configuration of Communication System 1

Hereinafter, a hardware configuration of the communication system 1 according to the embodiment will be described.

### <1-2-1> Hardware Configuration of Sharing AP 10

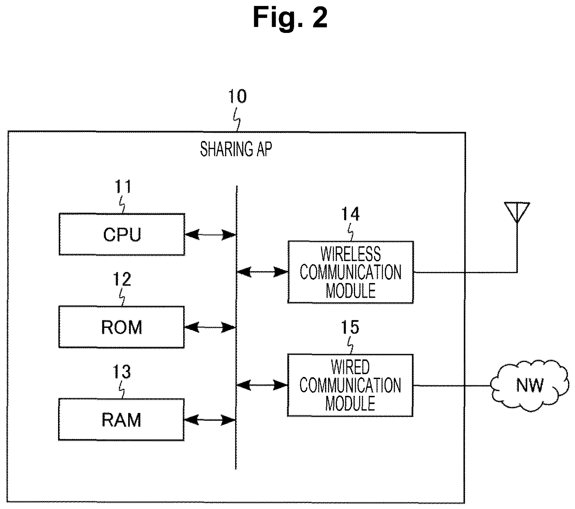

Fig. 2 is a block diagram illustrating an example of a hardware configuration of the sharing AP 10 included in the communication system 1 according to the embodiment. Fig. 2 illustrates a case where the sharing AP 10 and each of the shared APs 20 are connected in a wireless manner, and the sharing AP 10 and the network NW are connected in a wired manner. As illustrated in Fig. 2, the sharing AP 10 includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs and controls the entire operation of the sharing AP 10. The ROM 12 is, for example, a nonvolatile semiconductor memory and stores a program for controlling the sharing AP 10, control data, and the like. The RAM 13 is, for example, a volatile semiconductor memory, and is used as a work area for the CPU 11. The wireless communication module 14 is capable of transmitting and receiving wireless signals via an antenna. The wireless communication module 14 is used to transmit and receive data and the like to and from each of the shared APs 20. The wired communication module 15 is a circuit used to transmit and receive data and the like by a wired signal. The wired communication module 15 is connectable to the network NW.

Note that the sharing AP 10 may have another hardware configuration. For example, in a case where the sharing AP 10 is wirelessly connected to each of the network NW and the shared APs 20, the wired communication module 15 may be omitted from the sharing AP 10. In a case where the sharing AP 10 is connected to each of the network NW and the shared APs 20 in a wired manner, the wireless communication module 14 may be omitted from the sharing AP 10. The antenna may be built in the sharing AP 10 or may be externally connected.

### <1-2-2> Hardware Configuration of Shared AP 20

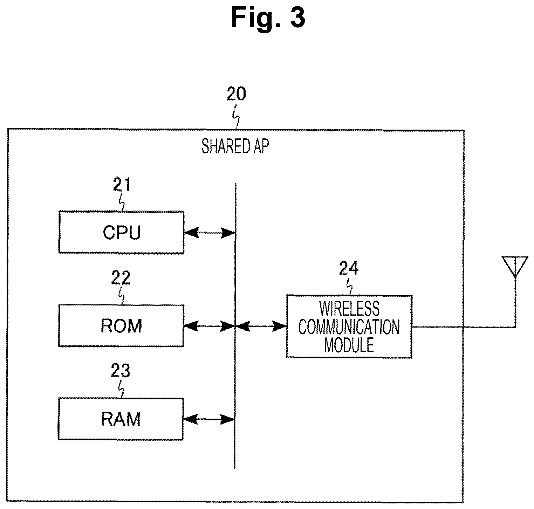

Fig. 3 is a block diagram illustrating an example of a hardware configuration of the shared AP 20 included in the communication system 1 according to the embodiment. Fig. 3 illustrates a case where the sharing AP 10 and the shared AP 20 are wirelessly connected. As illustrated in Fig. 3, the shared AP 20 includes, for example, a CPU 21, a ROM 22, a RAM 23, and a wireless communication module 24.

The CPU 21 is an integrated circuit capable of executing various programs and controls the entire operation of the shared AP 20. The ROM 22 is, for example, a nonvolatile semiconductor memory and stores a program for controlling the shared AP 20, control data, and the like. The RAM 23 is, for example, a volatile semiconductor memory, and is used as a work area for the CPU 21. The wireless communication module 24 is capable of transmitting and receiving wireless signals via an antenna. The wireless communication module 24 is used to transmit and receive data and the like with the sharing AP 10 and transmit and receive data and the like with the terminal apparatus 30.

Note that the shared AP 20 may have another hardware configuration. For example, in a case where the shared AP 20 is connected to the sharing AP 10 in a wired manner, a wired communication module 15 similar to that of the sharing AP 10 may be added to the shared AP 20. The antenna may be built in the shared AP 20 or may be externally connected.

### <1-2-3> Hardware Configuration of Terminal Apparatus 30

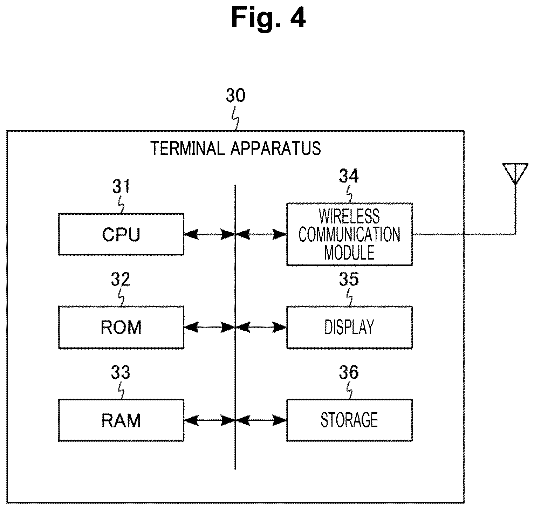

Fig. 4 is a block diagram illustrating an example of a hardware configuration of the terminal apparatus 30 included in the communication system 1 according to the embodiment. As illustrated in Fig. 4, the terminal apparatus 30 includes, for example, a CPU 31, a ROM 32, a RAM 33, a wireless communication module 34, a display 35, and a storage 36.

The CPU 31 is an integrated circuit capable of executing various programs, and controls the entire operation of the terminal apparatus 30. The ROM 32 is, for example, a nonvolatile semiconductor memory and stores a program for controlling the terminal apparatus 30, control data, and the like. The RAM 33 is, for example, a volatile semiconductor memory, and is used as a work area for the CPU 31. The wireless communication module 34 is capable of transmitting and receiving wireless signals via an antenna. The wireless communication module 34 is used to transmit and receive data and the like to and from the shared APs 20. The display 35 is, for example, a liquid crystal display (LCD) or an electro-luminescence (EL) display. The display 35 displays, for example, a graphical user interface (GUI) corresponding to application software. The storage 36 is a nonvolatile storage device, and stores, for example, system software or the like of the terminal apparatus 30.

The terminal apparatus 30 may have another hardware configuration. For example, in a case where the terminal apparatus 30 is an Internet of Things (IoT) terminal or the like, the display 35 may be omitted from the terminal apparatus 30. The display 35 may include a function as an input interface of the terminal apparatus 30. The antenna may be built in the terminal apparatus 30 or may be externally connected.

### <1-3> Functional Configuration of Communication System 1

Hereinafter, a functional configuration of the communication system 1 according to the embodiment will be described.

### <1-3-1> Functional Configuration of Sharing AP 10

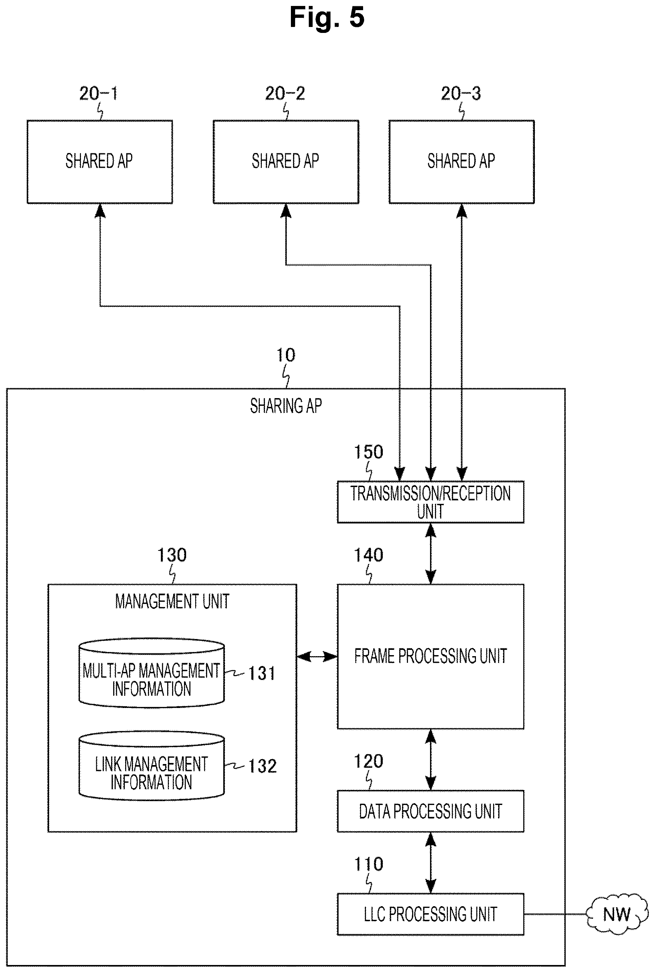

Fig. 5 is a block diagram illustrating an example of a functional configuration of the sharing AP 10 included in the communication system 1 according to the embodiment. The sharing AP 10, for example, functions as a computer including an LLC processing unit 110, a data processing unit 120, a management unit 130, a frame processing unit 140, and a transmission/reception unit 150. The LLC processing unit 110 is a functional block that executes processing corresponding to the LLC sublayer of the second layer and the third layer to the seventh layer. The data processing unit 120, the management unit 130, and the frame processing unit 140 are functional blocks that execute processing corresponding to the MAC sublayer of the second layer. In a case where the sharing AP 10 wirelessly communicates with each of the shared APs 20, the transmission/reception unit 150 is a functional block that executes processing corresponding to the first layer. In a case where the sharing AP 10 performs wired communication with each of the shared APs 20, the transmission/reception unit 150 is a functional block that executes processing corresponding to the MAC sublayer of the second layer.

The LLC processing unit 110 adds, for example, a destination service access point (DSAP) header, a destination service access point (SSAP) header, and the like to data received from the network NW to generate an LLC packet. Then, the LLC processing unit 110 inputs the generated LLC packet to the data processing unit 120. In addition, the LLC processing unit 110 extracts data from the LLC packet input from the data processing unit 120. Then, the LLC processing unit 110 transmits the extracted data to the network NW.

The data processing unit 120 adds a MAC header to the LLC packet input from the LLC processing unit 110 to generate a MAC frame. Then, the data processing unit 120 inputs the generated MAC frame to the frame processing unit 140. In addition, the data processing unit 120 extracts the LLC packet from the MAC frame input from the frame processing unit 140. Then, the data processing unit 120 inputs the extracted LLC packet to the LLC processing unit 110. Note that the MAC frame including data is also referred to as a "data frame".

The management unit 130 controls establishment of a wireless connection (wireless link) between the sharing AP 10 and the non-AP MLD of the terminal apparatus 30 in the multi-AP connection method. For example, the management unit 130 executes multi-AP association processing in response to a multi-AP association request from the terminal apparatus 30. For example, in a case where the terminal apparatus 30 uses the three A-STA#1 to A-STA#3, each of the A-STA#1 to A-STA#3 establishes wireless links with the A-AP#1 to A-AP#3 of the shared AP 20-1, the A-AP#4 to A-AP#6 of the shared AP 20-2, and the A-AP#7 to A-AP#9 of the shared AP 20-3 by the multi-AP association processing. At the time of actual data exchange, the management unit 130 sets any one of the established wireless links to enabled as a wireless link for data exchange and sets the other wireless links to disabled.

In addition, the management unit 130 includes multi-AP management information 131 and link management information 132. The multi-AP management information 131 includes information regarding the access points (that is, the sharing AP 10 and the shared APs 20-1, 20-2, and 20-3) used for the multi-AP connection and the terminal apparatus 30. For example, the multi-AP management information 131 is included for each terminal apparatus 30 that establishes multi-AP connection. The link management information 132 includes information regarding the state of the link established in the multi-AP connection and the R-TWT function. Details of each of the multi-AP management information 131 and the link management information 132 will be described below.

In a case where the MAC frame is input from the data processing unit 120 or the management unit 130, the frame processing unit 140 inputs the input MAC frame to the transmission/reception unit 150. Furthermore, in a case where the MAC frame is input from the transmission/reception unit 150, the frame processing unit 140 outputs the input frame to the data processing unit 120 or the management unit 130 according to the frame type. For example, in a case where a data frame is input from the transmission/reception unit 150, the frame processing unit 140 outputs the input frame to the data processing unit 120. In a case where the management frame or the control frame is input from the transmission/reception unit 150, the frame processing unit 140 outputs the input frame to the management unit 130. The management frame or the control frame includes, for example, management information. The management information can include notification information for any of the shared AP 20 and the terminal apparatus 30, control information regarding control of operation of any of the shared AP 20 and the terminal apparatus 30, and the like.

The transmission/reception unit 150 transmits and receives data, management information, and the like to and from each of a plurality of shared APs 20 that belongs to the sharing AP 10. In the present example, each of the shared APs 20-1, 20-2, and 20-3 is connected to the transmission/reception unit 150 in a wired or wireless manner.

In a case where the sharing AP 10 wirelessly communicates with each of the plurality of shared APs 20, the transmission/reception unit 150 includes one or more wireless signal processing units. The wireless signal processing units of the transmission/reception unit 150 transmit and receive wireless signals using frequency bands or channels different from each other. Each of the wireless signal processing units of the transmission/reception unit 150 generates a wireless frame by adding a preamble or the like to the MAC frame input from the frame processing unit 140, and converts the generated wireless frame into a wireless signal. Then, each of the wireless signal processing units transmits (radiates) the converted wireless signal to the respective shared APs 20 via the antenna. Furthermore, each of the wireless signal processing units of the transmission/reception unit 150 converts a wireless signal received from any one of the shared APs 20 via the antenna into a wireless frame. Each of the wireless signal processing units extracts a MAC frame from the converted wireless frame, and outputs the extracted MAC frame to the frame processing unit 140.

For example, in the transmission/reception unit 150, one wireless signal processing unit is included for each of the plurality of shared APs 20 that belongs to the sharing AP 10. Then, the frame processing unit 140 outputs data and the like transmitted to the shared AP 20-1 to the wireless signal processing unit associated with the shared AP 20-1, outputs data and the like transmitted to the shared AP 20-2 to the wireless signal processing unit associated with the shared AP 20-2, and outputs data and the like transmitted to the shared AP 20-3 to the wireless signal processing unit associated with the shared AP 20-3. The transmission/reception unit 150 may include a wireless signal processing unit allocated to transmission and reception of data and the like, and may include a wireless signal processing unit allocated to transmission of management information.

In a case where the sharing AP 10 performs wired communication with each of the plurality of shared APs 20, the transmission/reception unit 150 is connected to each of the plurality of shared APs 20 that belongs to the sharing AP 10 via a wired network. Then, the transmission/reception unit 150 transmits and receives data, management information, and the like to and from each of the shared APs 20-1 to 20-3 via the wired network. In this case, the transmission/reception unit 150 includes a network interface of the wired network.

Note that, after the multi-AP connection, the frame processing unit 140 distributes the transmission destination of a MAC frame input from the data processing unit 120 to any one of the plurality of shared APs 20-1, 20-2, and 20-3 that belongs to the sharing AP 10. For example, the frame processing unit 140 outputs a MAC frame to the wireless signal processing unit associated with the shared AP 20 to which an enabled link is allocated among the shared APs 20-1, 20-2, and 20-3 that belongs to the sharing AP 10. The frame processing unit 140 may determine the wireless signal processing unit of the output destination of the MAC frame according to a traffic identifier (TID) associated with the access category. Furthermore, the frame processing unit 140 can transmit information used to control the R-TWT function to each of the plurality of shared APs 20-1, 20-2, and 20-3 that belongs to the sharing AP 10 at the time of setting up an R-TWT agreement to be described below.

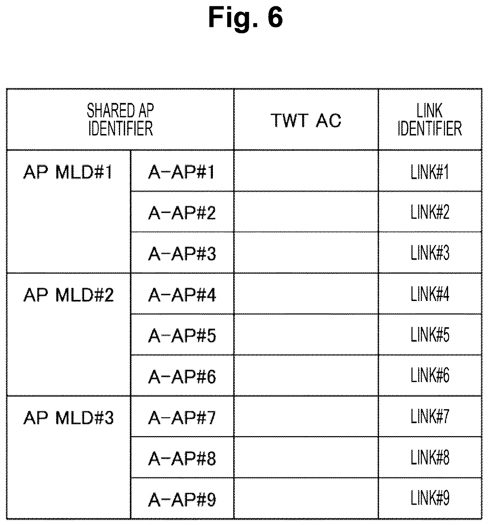

Fig. 6 is a table illustrating an example of the multi-AP management information 131 included in the management unit 130 of the sharing AP 10 included in the communication system 1 according to the embodiment. As illustrated in Fig. 6, the multi-AP management information 131 includes, for example, information regarding a shared AP identifier, a TWT agreement capability (TWT AC), an STA identifier, and a link identifier.

The information of the shared AP identifier included in the multi-AP management information 131 includes information regarding an identifier of an AP MLD allocated to the multi-AP connection and an identifier of an A-AP. In the present example, the A-AP#1 to A-AP#3 are allocated to the multi-AP connection in association with the AP MLD#1. The A-AP#4 to A-AP#6 are allocated to the multi-AP connection in association with the AP MLD#2. The A-AP#7 to A-AP#9 are allocated to the multi-AP connection in association with the AP MLD#3.

The information of the TWT agreement capability included in the multi-AP management information 131 is recorded for each link allocated to the multi-AP connection, and includes, for example, information used as a reference of scheduling propriety of the R-TWT SP. The sharing AP 10 can acquire, for example, the TWT agreement capability for each link by requesting each of the shared APs 20. The TWT agreement capability may simply be information indicating whether the R-TWT SP can be scheduled.

The information regarding the link identifier included in the multi-AP management information 131 includes information regarding the identifier of a link established by the multi-AP connection. The sharing AP 10, for example, manages enabled and disabled of a link used in the multi-AP connection by using the link identifier. In the present example, a link#1 to link#9 are allocated to the A-AP#1 to A-AP#9, respectively.

Note that the multi-AP management information may include information regarding a frequency band, a channel, operation parameters, an access category, and the like. The information of the frequency band indicates the frequency band used for the wireless link by the A-AP and the A-STA. The information of the channel indicates the channel used for the wireless link by the A-AP and the A-STA. The information of the operation parameters includes, for example, CWmin, CWmax, an arbitration interframe space (AIFS), and a transmission opportunity (TXOP) Limit. CWmin and CWmax indicate a minimum value and a maximum value of a contention window, respectively. The contention window is a parameter used to calculate backoff that is a transmission wait time for collision avoidance. AIFS is a fixed transmission wait time set for each traffic access category. TXOPLimit indicates an upper limit value of a channel occupancy period TXOP. The information of the access category is indicated by, for example, "voice (VO)", "video (VI)", "best effort (BE)", "background (BK)", and "low latency (LL)".

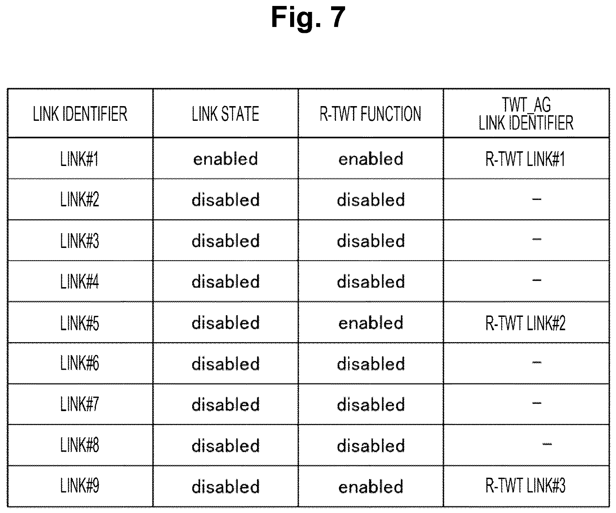

Fig. 7 is a table illustrating an example of information associated with one A-STA in the link management information 132 included in the management unit 130 of the sharing AP 10 included in the communication system 1 according to the embodiment. This table is included for each A-STA used in the multi-AP connection. As illustrated in Fig. 7, the link management information 132 includes information regarding, for example, a link state, an R-TWT function, and a TWT agreement group (TWT AG) link identifier for each link identifier.

The information of the link state included in the link management information 132 indicates whether the wireless link is enabled or disabled. That is, the fact that the link state is enabled indicates that data exchange using the wirelessly connected A-AP and A-STA is possible. The fact that the link state is disabled indicates that data exchange using the wirelessly connected A-AP and A-STA is impossible. In the link state in the present example, the link#1 is enabled and the other links are disabled. In this case, it is assumed that the terminal apparatus 30 is located at least within the communicable area of the shared AP 20-1.

The information of the R-TWT function included in the link management information 132 indicates whether the R-TWT function is enabled or disabled. In the present example, the R-TWT function in the link#1, link#5, and link#9 is enabled, and the R-TWT function in the other links is disabled. In the multi-AP connection, a link such as the link#5 and link#9 may exist in which the link state is disabled and the R-TWT function is enabled.

The information of the R-TWT_AG link identifier included in the link management information 132 is an identifier allocated to a link allocated to a multi-AP TWT agreement group. The multi-AP TWT agreement group is formed by a link that is set by an R-TWT agreement setup to be described below and in which the R-TWT function is enabled. In the present example, an R-TWT link#1, R-TWT link#2, and R-TWT link#3 are allocated to the link#1, link#5, and link#9, respectively.

Note that, in a case where the terminal apparatus 30 moves from the communicable area of the shared AP 20-1 to the communicable area of the shared AP 20-2 or 20-3, the link#1 may become disabled, and the link#5 or the link#9 may become enabled. In this case, since the R-TWT function of the link#5 and the link#9 is enabled, the terminal apparatus 30 can promptly start communication based on an R-TWT procedure (that is, communication using the R-TWT function) even after the movement. That is, in the communication system 1, the sharing AP 10 and the terminal apparatus 30 can perform communication based on the R-TWT procedure by detecting that both the link state and the R-TWT function are enabled.

The multi-AP management information 131 and the link management information 132 may be integrated. These pieces of information may be managed by tables in other formats. The management unit 130 may execute allocation (mapping) of traffic transmitted and received between the sharing AP 10 and the terminal apparatus 30 in cooperation with the AP MLDs of a plurality of shared APs 20 that belongs to the sharing AP 10 and the non-AP MLD of the terminal apparatus 30. For example, the management unit 130 instructs the frame processing unit 140 to transmit traffic on the basis of the allocation of the traffic. Then, the frame processing unit 140 causes the transmission/reception unit 150 to transmit the traffic to the shared AP 20 based on the instruction from the management unit 130. Specifically, the traffic allocated to the link associated with the shared AP 20-1 is transmitted from the transmission/reception unit 150 of the sharing AP 10 to the shared AP 20-1 on the basis of an instruction from the management unit 130. Note that the management unit 130 may allocate the traffic on the basis of the TID associated with the access category.

### <1-3-2> Functional Configuration of Shared AP 20

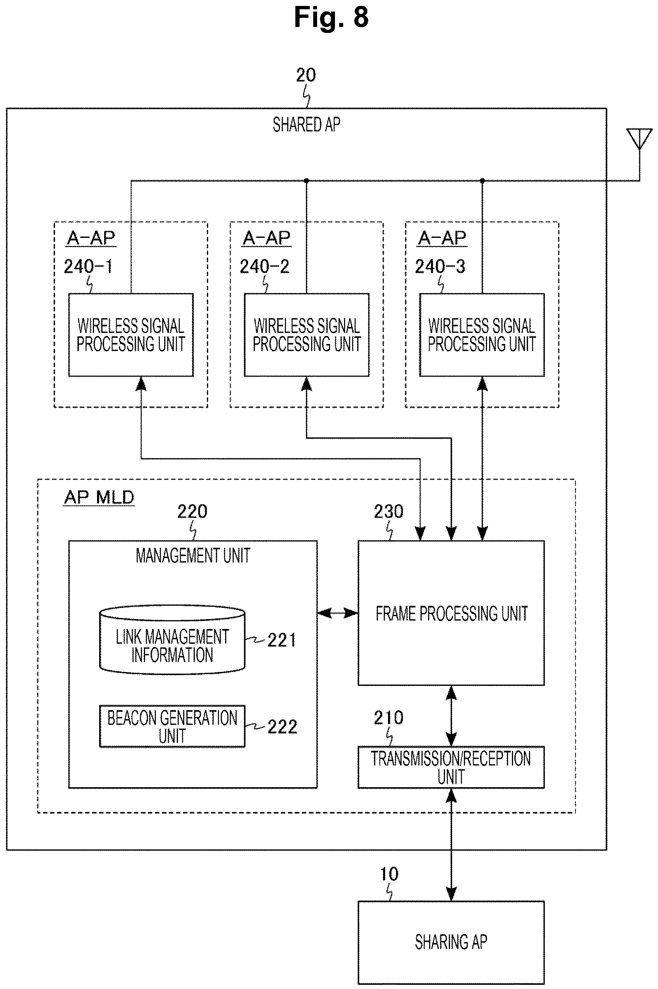

Fig. 8 is a block diagram illustrating an example of a functional configuration of the shared AP 20 included in the communication system 1 according to the embodiment. As illustrated in Fig. 8, the shared AP 20 functions as a computer including, for example, a transmission/reception unit 210, a management unit 220, a frame processing unit 230, and wireless signal processing units 240-1, 240-2, and 240-3. The management unit 220 and the frame processing unit 230 are functional blocks that execute processing corresponding to the MAC sublayer of the second layer. Each of the wireless signal processing units 240-1 to 240-3 is a functional block that executes processing corresponding to the MAC sublayer of the second layer and the first layer. In a case where the sharing AP 10 wirelessly communicates with each of the shared APs 20, the transmission/reception unit 210 is a functional block that executes processing corresponding to the first layer. In a case where the sharing AP 10 performs wired communication with each of the shared APs 20, the transmission/reception unit 210 is a functional block that executes processing corresponding to the MAC sublayer of the second layer.

The transmission/reception unit 210 transmits and receives data, management information, and the like to and from the sharing AP 10. In a case where the shared AP 20 performs wireless communication with the sharing AP 10, the transmission/reception unit 210 includes a wireless signal processing unit. The wireless signal processing unit of the transmission/reception unit 210 generates a wireless frame by adding a preamble or the like to a MAC frame input from the MAC frame processing unit 230. Then, the wireless signal processing unit of the transmission/reception unit 210 converts the generated wireless frame into a wireless signal. Then, the wireless signal processing unit transmits (radiates) the converted wireless signal to the sharing AP 10 via the antenna. Furthermore, the wireless signal processing unit of the transmission/reception unit 210 converts a wireless signal received from the sharing AP 10 via the antenna into a wireless frame. The wireless signal processing unit extracts a MAC frame from the converted wireless frame, and outputs the extracted MAC frame to the frame processing unit 230.

In a case where the shared AP 20 performs wired communication with the sharing AP 10, the transmission/reception unit 210 is connected to the sharing AP 10 via a wired network. Then, the transmission/reception unit 210 transmits and receives data, management information, and the like to and from the sharing AP 10 via the wired network. In this case, the transmission/reception unit 210 includes a network interface of the wired network.

The management unit 220 controls establishment of a wireless connection (wireless link) between the sharing AP 10 and the non-AP MLD of the terminal apparatus 30 in the multi-AP connection method. Furthermore, the management unit 220 manages the state of the wireless link between the A-AP of the shared AP 20 and the A-STA of the terminal apparatus 30 in the multi-AP connection. At the time of actual data exchange, the management unit 220 sets each of the wireless links to enabled or disabled as a wireless link for data exchange on the basis of an instruction from the management unit 130 of the sharing AP 10. Furthermore, the management unit 220 includes link management information 221 and a beacon generation unit 222.

The link management information 221 stores management information regarding the state of a wireless link used in the multi-AP connection. Furthermore, the link management information 221 includes, for example, information of the sharing AP 10 to which its own station belongs, and information regarding an A-STA of the terminal apparatus 30 that establishes a wireless link with its own station. The link management information 221 may store information included in the multi-AP management information 131 and the link management information 132. The management unit 220 manages enabled and disabled of a wireless link using the link management information 221.

The beacon generation unit 222 generates a beacon frame including information regarding multi-AP connection and a beacon frame including control parameters of the R-TWT function on the basis of the management information received from the sharing AP. The beacon generation unit 222 notifies the terminal apparatus 30 of the generated beacon frame via the frame processing unit 230 and at least one of the wireless signal processing units 240-1, 240-2, and 240-3. The beacon frame includes, for example, information of the sharing AP 10, information of the shared AP 20 of the own station, and information of the shared AP 20 of another station included in the multi-AP connection. The beacon frame may include the multi-AP management information 131, the link management information 132, and the like transferred from the sharing AP 10. The transmission of the beacon frame may be performed by broadcast or multicast.

Furthermore, the management unit 220 allocates traffic to the wireless link established by the shared AP 20 of its own station in accordance with an instruction regarding allocation of traffic from the sharing AP 10. Then, the management unit 220 notifies the frame processing unit 230 of the output destination of the traffic to be transmitted to the terminal apparatus 30 on the basis of the allocation of the traffic. As a result, the management unit 220 notifies the frame processing unit 230 of information indicating to which of the wireless signal processing units 240-1 to 240-3 the traffic to be transmitted to the terminal apparatus 30 is to be output.

In a case where a MAC frame is input from the transmission/reception unit 210, the frame processing unit 230 outputs the input MAC frame to the management unit 220 or at least one of the wireless signal processing units 240-1 to 240-3 according to the frame type and the allocation of the traffic. In a case where a MAC frame is input from any of the wireless signal processing units 240-1 to 240-3, the frame processing unit 230 outputs the input frame to the management unit 220 or the transmission/reception unit 210 according to the frame type. For example, in a case where a data frame is input from any of the wireless signal processing units 240-1 to 240-3, the frame processing unit 230 outputs the input frame to the transmission/reception unit 210. In a case where a data frame is input from the transmission/reception unit 210, the frame processing unit 230 outputs the input frame to at least one of the wireless signal processing units 240-1 to 240-3. In a case where a management frame or a control frame for its own station is input from the transmission/reception unit 210, the frame processing unit 230 outputs the input frame to the management unit 220. In a case where a management frame or a control frame for the terminal apparatus 30 is input from the transmission/reception unit 210, the frame processing unit 230 outputs the input frame to at least one of the wireless signal processing units 240-1 to 240-3.

Each of the wireless signal processing units 240-1, 240-2, and 240-3 is capable of transmitting and receiving data, management information, and the like to and from the terminal apparatus 30 by wireless communication. Each of the wireless signal processing units 240 uses the same frequency band and channel as those of the A-STA connected wirelessly. Each of the wireless signal processing units 240 generates a wireless frame by adding a preamble and the like to the MAC frame input from the MAC frame processing unit 230. Then, each of the wireless signal processing units 240 converts the generated wireless frame into a wireless signal. Then, each of the wireless signal processing units 240 transmits (radiates) the converted wireless signal to the terminal apparatus 30 via the antenna. Further, each of the wireless signal processing units 240 converts a wireless signal received from the terminal apparatus 30 via the antenna into a wireless frame. Each of the wireless signal processing units 240 extracts a MAC frame from the converted wireless frame, and outputs the extracted MAC frame to the frame processing unit 230.

Note that, in a case where the sharing AP 10 and the shared AP 20 perform wireless communication, the transmission/reception unit 210 and each of the wireless signal processing units 240 may be integrated. In this case, the wireless communication between the sharing AP 10 and the shared AP 20 is executed via any one of the wireless signal processing units 240-1 to 240-3 or another wireless signal processing unit 240 (not illustrated).

In the example illustrated in Fig. 8, in the case of the shared AP 20-1, the transmission/reception unit 210, the management unit 220, and the frame processing unit 230 correspond to the AP MLD#1. In the case of the shared AP 20-2, the transmission/reception unit 210, the management unit 220, and the frame processing unit 230 correspond to the AP MLD#2. In the case of the shared AP 20-3, the transmission/reception unit 210, the management unit 220, and the frame processing unit 230 correspond to the AP MLD#3. In the case of the shared AP 20-1, the wireless signal processing units 240-1, 240-2, and 240-3 correspond to the A-AP#1, A-AP#2, and A-AP#3, respectively. In the case of the shared AP 20-2, the wireless signal processing units 240-1, 240-2, and 240-3 correspond to the A-AP#4, A-AP#5, and A-AP#6, respectively. In the case of the shared AP 20-3, the wireless signal processing units 240-1, 240-2, and 240-3 correspond to the A-AP#7, A-AP#8, and A-AP#9, respectively.

### <1-3-3> Functional Configuration of Terminal Apparatus 30

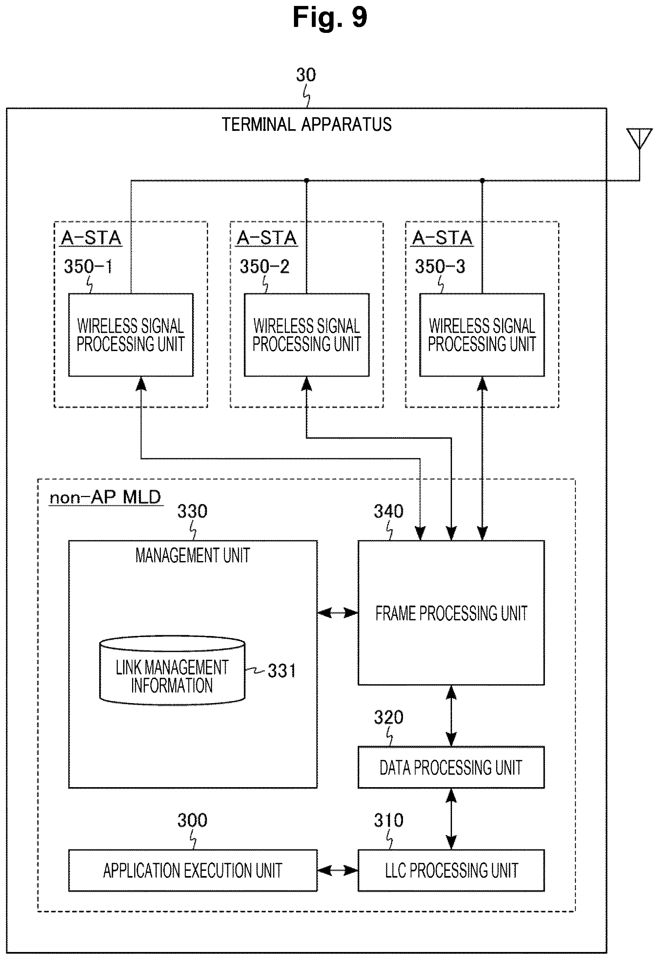

Fig. 9 is a block diagram illustrating an example of a functional configuration of the terminal apparatus 30 included in the communication system 1 according to the embodiment. The terminal apparatus 30 functions as a computer including an application execution unit 300, an LLC processing unit 310, a data processing unit 320, a management unit 330, a frame processing unit 340, and wireless signal processing units 350-1, 350-2, and 350-3. The application execution unit 300 is a functional block that executes processing corresponding to the seventh layer. The LLC processing unit 310 is a functional block that executes processing corresponding to the LLC sublayer of the second layer and the third layer to the sixth layer. The data processing unit 320, the management unit 330, and the frame processing unit 340 are functional blocks that execute processing corresponding to the MAC sublayer of the second layer. Each of the wireless signal processing units 350-1 to 350-3 is a functional block that executes processing corresponding to the MAC sublayer of the second layer and the first layer.

The application execution unit 300 executes an application on the basis of data input from the LLC processing unit 310. Furthermore, the application execution unit 300 inputs data to the LLC processing unit 310. For example, the application execution unit 300 can display application information on the display 35. Further, the application execution unit 300 can operate on the basis of operation of an input interface.

The LLC processing unit 310 adds a DSAP header, an SSAP header, and the like to the data input from the application execution unit 300 to generate an LLC packet. Then, the LLC processing unit 310 inputs the generated LLC packet to the data processing unit 320. In addition, the LLC processing unit 310 extracts data from the LLC packet input from the data processing unit 320. Then, the LLC processing unit 310 inputs the extracted data to the application execution unit 300.

The data processing unit 320 adds a MAC header to the LLC packet input from the LLC processing unit 310 to generate a MAC frame. Then, the data processing unit 320 inputs the generated MAC frame to the MAC frame processing unit 340. Furthermore, the data processing unit 320 extracts the LLC packet from the MAC frame input from the frame processing unit 340. Then, the data processing unit 320 inputs the extracted LLC packet to the LLC processing unit 310.

The management unit 330 controls establishment of a wireless connection (wireless link) between the sharing AP 10 and the non-AP MLD of the terminal apparatus 30 in the multi-AP connection method. The management unit 330 can acquire management information from a beacon received from the shared AP 20, for example. Furthermore, the management unit 330 manages the state of the wireless link between the A-AP of the shared AP 20 and the A-STA of the terminal apparatus 30 in the multi-AP connection. At the time of actual data exchange, the management unit 330 sets each of the wireless links to enabled or disabled as a wireless link for data exchange on the basis of an instruction from the management unit 130 of the sharing AP 10. Furthermore, the management unit 330 includes link management information 331.

The link management information 331 stores management information regarding the state of a wireless link used in the multi-AP connection. Furthermore, the link management information 331 includes, for example, information of the sharing AP 10 to which its own station belongs, and information regarding an A-AP of the shared AP 20 that establishes a wireless link with its own station. The link management information 331 may store information included in the multi-AP management information 131 and the link management information 132. The management unit 330 manages enabled and disabled of a wireless link using the link management information 331.

In a case where a MAC frame is input from the data processing unit 320, the frame processing unit 340 outputs the input frame to at least one of the wireless signal processing units 240-1 to 240-3 according to the allocation of the traffic. In a case where a MAC frame is input from any of the wireless signal processing units 350-1 to 350-3, the frame processing unit 230 outputs the input frame to the management unit 330 or the data processing unit 320 according to the frame type. For example, in a case where a data frame is input from any of the wireless signal processing units 350-1 to 350-3, the frame processing unit 340 outputs the input frame to the data processing unit 320. In a case where a data frame is input from the data processing unit 320, the frame processing unit 340 outputs the input frame to at least one of the wireless signal processing units 350-1 to 350-3. In a case where a management frame or a control frame for its own station is input from any of the wireless signal processing units 350-1 to 350-3, the frame processing unit 340 outputs the input frame to the management unit 330.

Each of the wireless signal processing units 350-1, 350-2, and 350-3 is capable of transmitting and receiving data, management information, and the like to and from the shared AP 20 by wireless communication. Each of the wireless signal processing units 350 uses the same frequency band and channel as those of the A-AP connected wirelessly. Each of the wireless signal processing units 350 generates a wireless frame by adding a preamble and the like to the MAC frame input from the MAC frame processing unit 340. Then, each of the wireless signal processing units 350 converts the generated wireless frame into a wireless signal. Then, each of the wireless signal processing units 350 transmits (radiates) the converted wireless signal to the shared AP 20 via the antenna. Further, each of the wireless signal processing units 350 converts a wireless signal received from the shared AP 20 via the antenna into a wireless frame. Each of the wireless signal processing units 350 extracts a MAC frame from the converted wireless frame, and outputs the extracted MAC frame to the frame processing unit 340.

In the example illustrated in Fig. 9, the application execution unit 300, the LLC processing unit 310, the data processing unit 320, the management unit 330, and the frame processing unit 340 correspond to the non-AP MLD#1. Furthermore, the wireless signal processing units 350-1, 350-2, and 350-3 correspond to the A-STA#1, the A-STA#2, and the A-STA#3, respectively.

### <2> Operation

Next, an operation of the communication system 1 according to the embodiment will be described.

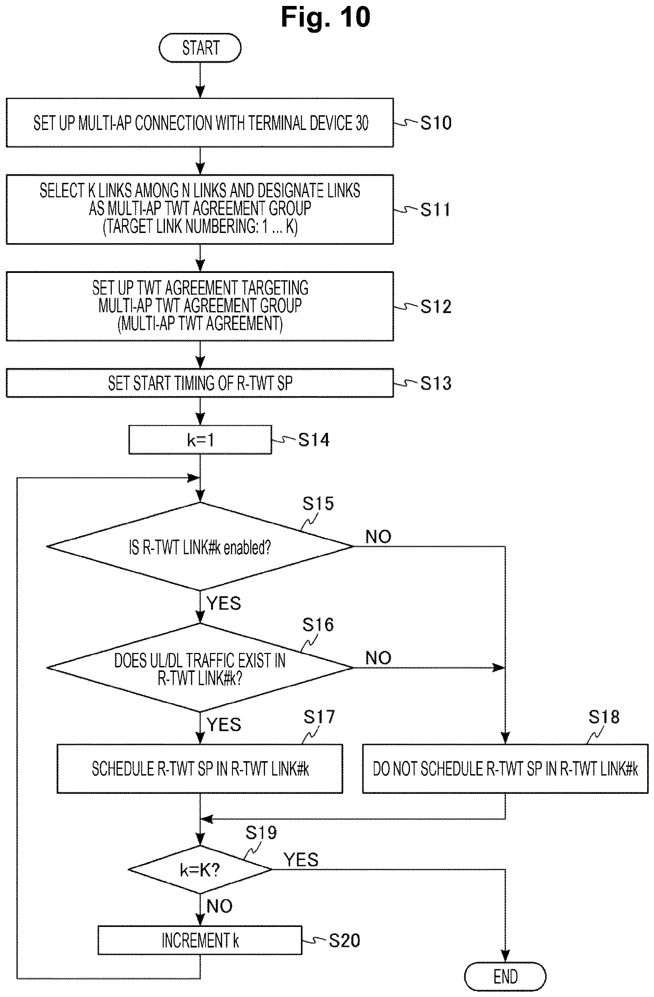

Fig. 10 is a flowchart illustrating an example of a communication method of the sharing AP 10 included in the communication system according to the embodiment. Hereinafter, an example of a series of processing from establishment of multi-AP connection to setup of the R-TWT function will be described with reference to Fig. 10. Note that the operation of the sharing AP 10 described below is executed by the management unit 130, for example.

For example, the sharing AP 10 starts a series of processing in Fig. 10 in response to a request from the terminal apparatus 30 received via any of the shared APs 20.

First, the sharing AP 10 sets up multi-AP connection with the terminal apparatus 30 (S10). In the processing of S10, for example, a management frame or the like is exchanged between the management unit 130 of the sharing AP 10 and the non-AP MLD of the terminal apparatus 30 and between the management unit 130 of the sharing AP 10 and the AP MLD of each of the shared APs 20. In the present example, N link#1 to link#N are established in the multi-AP connection between the sharing AP 10 and the terminal apparatus 30. When the setup of the multi-link, that is, the multi-AP connection using the plurality of shared APs 20 is completed, the sharing AP 10 proceeds to the processing of S11. In the multi-link setup, authentication and association processing of other links included in the multi-link may be executed using the first link established with the terminal apparatus 30, or authentication and association processing may be executed using a plurality of links.

In the processing of S11, the sharing AP 10 selects K links among the N link#1 to link#N and designates the links as a multi-AP TWT agreement group. "N" is an integer larger than or equal to 2 and corresponds to the number of links used in the multi-AP connection. That is, in the processing of S11, K links among the plurality of wireless links established by the multi-AP connection are designated as the multi-AP TWT agreement group. Furthermore, in the processing of S11, the sharing AP 10 executes target link numbering (1 ... K). "K" is an integer larger than or equal to 2 and corresponds to the number of links for which the R-TWT function is set enabled. Accordingly, the R-TWT link#1 to an R-TWT link#K are allocated in the multi-AP connection.

Next, the sharing AP 10 sets up a TWT agreement for the multi-AP TWT agreement group (S12). In the processing of S12, the TWT agreement is collectively set for all the links included in the multi-AP TWT agreement group. Specifically, in the TWT agreement, a request including all identifiers of target links and a response are exchanged. In the processing of S12, a link in which the R-TWT function is enabled is determined on the basis of information of the TWT agreement capability in a notification from each of the shared APs 20. The setup of the TWT agreement is performed, for example, via a specific A-AP of the shared AP 20. This specific A-AP corresponds, for example, to a link that the non-AP MLD has requested for the TWT agreement setup. Then, the non-AP MLD of the terminal apparatus 30 is notified of the result of the setup of the TWT agreement. Note that the processing of S12 may be referred to as "multi-AP TWT agreement".

Next, the sharing AP 10 sets a start timing of the R-TWT SP (S13). That is, the sharing AP 10 determines the TWT start time. In the processing of S13, the TWT period, the TWT duration, the transmission suppression period, and the like may be set together. The sharing AP 10 may set the TWT start time, the TWT duration, and the TWT period in accordance with the generation period of low latency traffic. The sharing AP 10 may acquire the generation period of the low latency traffic by any method. For example, the sharing AP 10 may acquire, from the terminal apparatus 30, information of a data generation period set for the application that generates low latency traffic, and the like, and use the information for setting up the R-TWT function. The AP MLD of the shared AP 20 and the non-AP MLD of the terminal apparatus 30 are notified of the set start timing of the R-TWT SP.

Next, processing of "k = 1" is executed (S14). The "k" is a variable for executing processing to be described below. The number "1" assigned to k in the processing of S14 corresponds to the first number allocated to the identifier of the R-TWT link (that is, R-TWT agreement group link identifier).

Next, the sharing AP 10 confirms whether the R-TWT link#k is enabled (S15). In the processing of S15, for example, the link management information 132 is referred to, and the link state of the R-TWT link#k is confirmed.

In the processing of S15, if it is confirmed that the R-TWT link#k is enabled (S15: YES), the sharing AP 10 proceeds to the processing of S16.

In the processing of S15, if it is confirmed that the R-TWT link#k is not enabled, that is, disabled (S15: NO), the sharing AP 10 proceeds to the processing of S18.

In the processing of S16, the sharing AP 10 confirms whether uplink (UL)/downlink (DL) traffic exists in the R-TWT link#k. That is, the sharing AP 10 confirms whether traffic in the uplink direction or the downlink direction allocated to the R-TWT link#k exists.

In the processing of S16, if it is confirmed that the UL/DL traffic exists in the R-TWT link#k (S16: YES), the sharing AP 10 proceeds to the processing of S17.

In the processing of S16, if it is confirmed that the UL/DL traffic does not exist in the R-TWT link#k (S16: NO), the sharing AP 10 proceeds to the processing of S18.

In the processing of S17, the sharing AP 10 schedules the R-TWT SP in the R-TWT link#k. That is, in the TWT period, the TWT SP for the R-TWT link#k is set.

In the processing of S18, the sharing AP 10 does not schedule the R-TWT SP in the R-TWT link#k. That is, in the TWT period, the TWT SP for the R-TWT link#k is not set. When the processing of S18 is completed, the sharing AP 10 proceeds to the processing of S19. Note that the sharing AP 10 may skip the processing of S18 and proceed to the processing of S19.

In the processing of S19, the sharing AP 10 confirms whether "k = K" is satisfied. That is, the sharing AP 10 confirms whether the processing of S17 or the processing of S18 has been executed for all R-TWT links set by the multi-AP connection.

In the processing of S19, if it is confirmed that "k = K" is not satisfied (S19: NO), the sharing AP 10 increments k (S20), and proceeds to the processing of S15. As a result, the sharing AP 10 executes processing as to whether to schedule the R-TWT SP for the next R-TWT link.

In the processing of S19, in a case where it is confirmed that "k = K" is satisfied (S19: YES), the sharing AP 10 ends the series of processing of Fig. 10 (end). Thereafter, the communication system 1 executes communication based on the R-TWT procedure. That is, uplink or downlink low latency traffic is transmitted and received in the scheduled R-TWT SP.

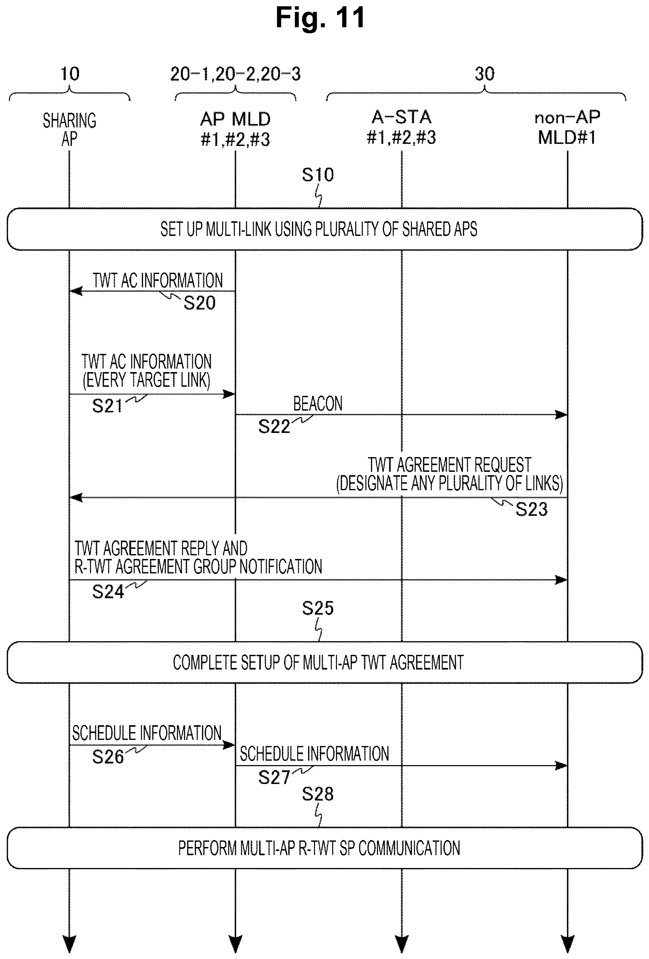

Fig. 11 is a sequence diagram illustrating an example of processing from multi-link setup to start of R-TWT communication in the communication system 1 according to the embodiment. Fig. 11 illustrates processing sequences among the sharing AP 10, the AP MLD#1, AP MLD#2, and AP MLD#3 respectively corresponding to the shared APs 20-1, 20-2, and 20-3, the A-STA#1, A-STA#2, and A-STA#3, and the non-AP MLD#1 corresponding to the terminal apparatus 30. Hereinafter, an example of exchange of information in the communication system 1 regarding setup of the R-TWT function will be described with reference to Fig. 11. Note that communication between each AP MLD and the non-AP MLD#1 is executed via an enabled A-STA and A-AP (not illustrated) pair.

First, the multi-AP connection is set up by the processing of S10. As a result, the multi-AP connection using a plurality of A-STAs of the non-AP MLD#1 and a plurality of A-APs of the AP MLD#1 to AP MLD#3 that belong to the sharing AP 10 is established.

Next, processing related to setup of the R-TWT function is executed among the sharing AP 10, the AP MLD#1 to AP MLD#3, and the non-AP MLD#1. Specifically, first, each of the AP MLD#1 to AP MLD#3 transmits information (TWT AC information) of the TWT agreement capability for each link of its own station to the sharing AP 10 (S20). The TWT AC information may be transmitted on the basis of a request from the sharing AP 10, or the AP MLD may voluntarily transmit the TWT AC information to the sharing AP 10.

Upon collecting the TWT AC information of each link, the sharing AP 10 notifies each AP MLD of information (TWT AC information) of availability of the R-TWT function in each link determined on the basis of the TWT AC information among the set up links (S21). The information of which each AP MLD is notified in the processing of S21 includes at least information of all target links (every target link) for which the TWT function is available.

Then, each AP MLD notifies the non-AP MLD#1 of the information of availability of the R-TWT in the notification from the sharing AP 10 via a beacon (S22). Specifically, each A-STA receives the beacon and transfers the information of availability of the R-TWT included in the beacon to the non-AP MLD#1.

The non-AP MLD#1 selects (designates) any plurality of links among the plurality of links set up in the multi-AP connection on the basis of the information regarding the TWT agreement capability in the notification. Then, the non-AP MLD#1 requests the sharing AP 10 to set up the TWT agreement on the selected (designated) link (S23: TWT agreement request).

On the basis on the TWT agreement request, the sharing AP 10 selects a link that forms the TWT agreement, and designates a multi-AP TWT agreement group. Then, the sharing AP 10 performs the TWT agreement setup via a specific A-AP of the shared AP 20 and notifies the non-AP MLD (S24: TWT agreement reply and TWT agreement group notification). This specific A-AP corresponds, for example, to a link that the non-AP MLD#1 has requested for the TWT agreement setup. When the processing of S24 is completed, the setup of the multi-AP TWT agreement is completed (S25). In accordance with the multi-AP TWT agreement setup, each of the sharing AP 10, the shared APs 20, and the terminal apparatus 30 appropriately updates the corresponding link management information.

Thereafter, the sharing AP 10 designates a timing to start the R-TWT SP and notifies each multi-AP TWT agreement group. Specifically, each AP MLD is notified of schedule information such as the TWT start time (S26). Each AP MLD sets the R-TWT function on the basis of the schedule information in the notification. Then, each AP MLD#1 notifies the non-AP MLD#1 of the schedule information in the notification (S27). In multi-AP R-TWT SP communication, at the designated timing, the R-TWT SP is scheduled for a link in which an enabled UL or DL traffic exists among links included in the multi-AP TWT agreement group, and the communication based on the R-TWT procedure is executed (S28).

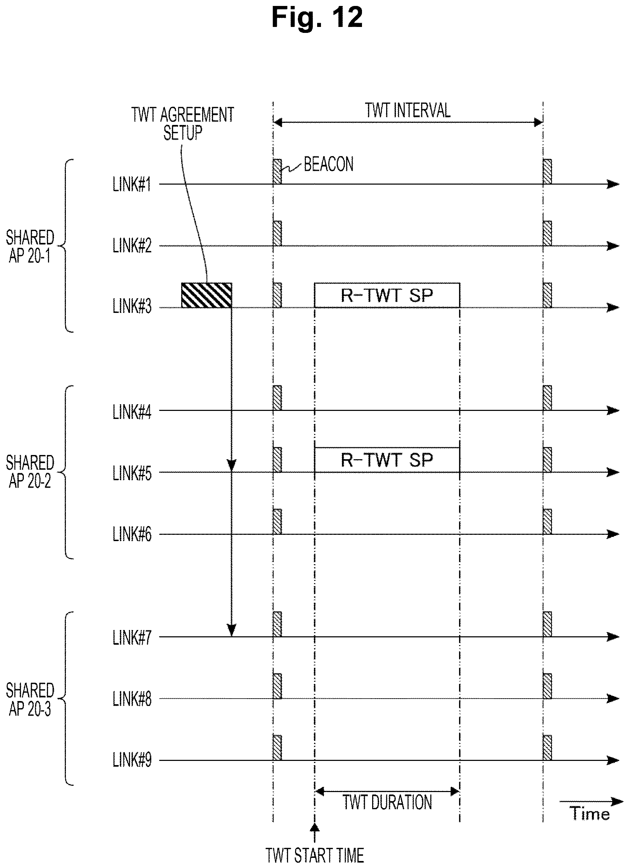

Fig. 12 is a time chart illustrating an example of the R-TWT communication in the communication system 1 according to the embodiment. Fig. 12 illustrates processing sequences of the link#1 to link#3 corresponding to the shared AP 20-1, the link#4 to link#6 corresponding to the shared AP 20-2, and the link#7 to link#9 corresponding to the shared AP 20-3. Hereinafter, an outline of communication using the R-TWT function will be described with reference to Fig. 12.

In the present example, the link#3 and the link#5 are set to be enabled, and the other links are set to be disabled. Then, the TWT agreement setup is executed between the sharing AP 10 and the terminal apparatus 30 using the link#3. In the present example, links included in the TWT agreement group are the link#3, link#5, and link#7. Then, the result of the TWT agreement setup is also applied to each of the TWT agreement group link #5 and the link#7 via the sharing AP 10. That is, the result of the TWT agreement setup is also applied to the link#7 of the shared AP 20-3 outside the communicable area. That is, at least one link in the TWT agreement group may be enabled for TWT agreement setup. Thereafter, in the communication system 1, communication using the R-TWT function is performed.

When the TWT period starts, each link simultaneously transmits (radiates) a beacon signal for notification of the R-TWT SP. The beacon signal may include, for example, a TWT start time, a TWT duration, a TWT interval, a transmission suppression period, and the like as management information used by the R-TWT function. Note that such management information used in the R-TWT function is included not only in the beacon signal but also in a multi-link probe response (for example, processing included in S10 illustrated in Fig. 11) at the time of multi-link setup. Upon receiving the beacon signal, the terminal apparatus 30 acquires the TWT start time, the TWT duration, the TWT interval, and the like, and notifies each A-STA.

As a result, in each of the link#3 and the link#5, the R-TWT SP can be set at the same timing. On the other hand, the link#7 is included in the TWT agreement group, but the setting of the R-TWT SP is omitted because the link is disabled. In the link to which the R-TWT SP is allocated, frame exchange of low latency traffic is preferentially executed. When the R-TWT SP ends, the terminal apparatus 30 and another terminal apparatus execute frame exchange using an enabled link until the next TWT period.

Note that, in the R-TWT SP, transmission of traffic of another terminal apparatus can be suppressed or prohibited on the basis of the setting of the transmission suppression period. Furthermore, according to the presence or absence of traffic from the sharing AP 10 or a buffer status report (BSR) from the terminal apparatus 30, the R-TWT SP of the link may not be set, and the transmission suppression period may not be set. This is because in a case where traffic is not generated, another terminal apparatus needs to end communication before the start of the R-TWT SP, resulting in inefficient communication.

### <3> Advantageous Effects of Embodiment

According to the communication system 1 according to the embodiment described above, a wireless communication environment in which low latency traffic can be efficiently transmitted can be provided. Hereinafter, advantageous effects of the embodiment will be described in detail.

In multi-link between one AP MLD (access point) and one non-AP MLD (terminal apparatus), an A-AP and an A-STA in one pair execute a TWT agreement, whereby the TWT agreement in all links of the AP MLD can be set up. However, the setup of the TWT agreement does not assume a case where the R-TWT function is used in each of a plurality of shared APs 20 in an environment of multi-AP connection.

On the other hand, the sharing AP 10 in the communication system 1 according to the embodiment executes setup of the TWT agreement for a specific or all links of a plurality of shared APs 20 that belongs to the sharing AP 10 in response to the TWT request from the terminal apparatus 30 connected to the sharing AP 10 that is belonged to. At this time, the sharing AP 10 aggregates a TWT agreement between a plurality of any A-APs of the plurality of shared APs and the A-STA into a TWT agreement between one A-AP of the any shared AP and the A-STA. In other words, a TWT agreement in multi-AP connection is set up across links of a plurality of shared APs. That is, by a TWT agreement being executed using one link, the TWT agreement can be set up without the TWT agreement being executed for each of the plurality of shared APs 20.

As a result, the communication system 1 according to the embodiment can implement the TWT agreement from an enabled link of the shared AP 20 even for a link of the shared AP 20 of which the current link is disabled, such as the shared AP 20 located outside the communicable area. Then, even in a case where the shared AP 20 of the connection destination is changed, that is, even in a case where handover is performed, the terminal apparatus 30 can use the R-TWT function without performing the TWT agreement again.

Furthermore, the sharing AP 10 schedules the R-TWT SP for an enabled multi-AP TWT agreement group with subordinate A-STAs that form multi-AP connection, and notifies each shared AP 20 of the R-TWT SP. Then, each shared AP 20 sets the R-TWT SP according to the schedule in the notification.

As a result, the communication system 1 according to the embodiment can synchronize the transmission timing of the beacon of each shared AP 20 with the R-TWT SP. As a result, the communication system 1 according to the embodiment can perform cooperative communication among a plurality of shared APs 20 in multi-AP connection, and can reduce latency and jitter of low latency traffic. Therefore, the communication system 1 according to the embodiment can provide a wireless communication environment in which low latency traffic can be efficiently transmitted.

Furthermore, in the communication system 1 according to the embodiment, the schedule of the R-TWT SP can be omitted according to the presence or absence of traffic from the sharing AP 10 or the buffer status report (BSR) from the terminal apparatus 30. As a result, the communication system 1 according to the embodiment can omit communication restriction to another terminal apparatus 30 according to the schedule of the R-TWT SP in a case where low latency traffic is not generated, and can implement efficient communication.

### <4> Others

The conversion processing from a wireless frame to a wireless signal described in the embodiment includes, for example, convolutional encoding processing, interleave processing, subcarrier modulation processing, inverse fast Fourier transform processing, OFDM modulation processing, and frequency conversion processing. The conversion processing from a wireless signal to a wireless frame described in the embodiment includes, for example, frequency conversion processing, OFDM demodulation processing, fast Fourier transform processing, subcarrier demodulation processing, deinterleave processing, and Viterbi decoding processing. In the multi-link, one or a plurality of wireless links can be allocated to one traffic type. For example, the association between traffic and a wireless link is set such that a traffic amount becomes equal among a plurality of wireless links that forms multi-link. Traffic of similar types (priority/non-priority or the like) may be collected in a specific link included in the multi-link.

In the embodiment, each of the CPU 11 of the sharing AP 10, the CPU 21 of the shared AP 20, and the CPU 31 of the terminal apparatus 30 may be another circuit. For example, each of the sharing AP 10, the shared AP 20, and the terminal apparatus 30 may include a micro processing unit (MPU) or the like instead of the CPU. Each of the processing described in the embodiment may be implemented by dedicated hardware. Processing of each of the sharing AP 10, the shared AP 20, and the terminal apparatus 30 may include processing executed by software and processing executed by hardware in combination or may include only one of the pieces of processing. The CPU may be referred to as a "processor". The wireless communication module may be referred to as a "communication circuit".

The flowcharts used to describe the operation in the embodiment are merely examples. Each type of the operation described in the embodiment may be interchanged within a possible processing order, or other processing may be added. For example, the link setup method and the R-TWT communication method described in the embodiment are merely examples. As the wireless communication standard, a wireless communication standard different from the IEEE802.11 standard may be used.

Note that the present invention is not limited to the embodiments described above and can variously be modified at an execution stage within a scope not departing from the gist of the present invention. The embodiments may be implemented in appropriate combination, and in that case, the combined effect can be obtained. Furthermore, the above embodiments include various inventions, and various inventions can be extracted by combinations selected from a plurality of disclosed components. For example, even if some components are deleted from all the components described in the embodiments, a configuration from which the components have been deleted can be extracted as an invention, as long as the problem can be solved and the effects can be achieved.

### Reference Signs List

1 Communication system
10 Sharing access point
30 Terminal apparatus
20, 20-1, 20-2, 20-3 Shared access point
11, 21, 31 CPU
12, 22, 32 ROM
13, 23, 33 RAM
14, 24, 34 Wireless communication module
15 Wired communication module
35 Display
36 Storage
110, 310 LLC processing unit
120, 320 Data processing unit
130, 220, 330 Management unit
131 Multi-AP management information
132, 221, 331 Link management information
140, 230, 340 Frame processing unit
150, 210 Transmission/reception unit
222 Beacon generation unit
240-1 to 240-3, 350-1 to 350-3 Wireless signal processing unit
300 Application execution unit

## Claims

1. A sharing access point in a communication system including the sharing access point including a first management unit, a shared access point including a second management unit and a first wireless signal processing unit, another shared access point including a third management unit and a second wireless signal processing unit, and a terminal apparatus including a fourth management unit, a third wireless signal processing unit, and a fourth wireless signal processing unit, wherein
the first management unit establishes a first wireless link between the first wireless signal processing unit and the third wireless signal processing unit and a second wireless link between the second wireless signal processing unit and the fourth wireless signal processing unit, collectively establishes setting of a service period in which frame exchange of traffic can be preferentially performed for the first wireless link and the second wireless link by transmitting and receiving a frame to and from the third management unit via the first wireless link, and notifies each of the second management unit and the third management unit of a start time of the service period.

2. The sharing access point according to claim 1, wherein
the first management unit causes the third management unit to schedule the service period on the second wireless link in a case where the second wireless link is enabled, and not to schedule the service period on the second wireless link in a case where the second wireless link is disabled.

3. A shared access point in a communication system including a sharing access point including a first management unit, the shared access point including a second management unit and a first wireless signal processing unit, another shared access point including a second wireless signal processing unit, and a terminal apparatus including a third wireless signal processing unit in which a first wireless link with the first wireless signal processing unit and a fourth wireless signal processing unit in which a second wireless link with the second wireless signal processing unit is established, wherein
the second management unit sets a service period to the first wireless link on a basis of reception of information regarding a start time of the service period from the first management unit without transmitting or receiving a frame regarding setting the service period in which traffic exchange can be preferentially performed for the first wireless link and the second wireless link via the first wireless link.

4. The shared access point according to claim 3, wherein
the second management unit schedules the service period on the first wireless link in a case where the first wireless link is enabled, and does not schedule the service period on the first wireless link in a case where the first wireless link is disabled on a basis of an instruction from the first management unit.

5. A terminal apparatus in a communication system including a sharing access point including a first management unit, a shared access point including a first wireless signal processing unit, another shared access point including a second wireless signal processing unit, and the terminal apparatus including a second management unit, a third wireless signal processing unit in which a first wireless link with the first wireless signal processing unit and a fourth wireless signal processing unit in which a second wireless link with the second wireless signal processing unit is established, wherein
the second management unit collectively establishes setting of a service period in which frame exchange of traffic can be preferentially performed for the first wireless link and the second wireless link by transmitting and receiving a frame to and from the first management unit via the first wireless link, and executes frame exchange using the service period at a same timing in each of the first wireless link and the second wireless link.

6. The terminal apparatus according to claim 5, wherein
the second management unit receives a beacon signal at a same timing in each of the first wireless link and the second wireless link after the establishment, and executes frame exchange using the service period in each of the first wireless link and the second wireless link on a basis of information of a start time of the service period included in the beacon signal.
